# EUROPEAN PATENT APPLICATION

(11) **EP 1 151 694 A1**
(43) Date of publication of application: **07.11.2001**
(21) Application number: 00201625.1
(22) Date of filing: 05.05.2000
(51) Int. Cl.: A47B 13/08, B29C 70/76

(54) **Table top joint**

(30) Priority: 07.05.1999 GB 9910445
(71) Applicant: Morgan, David Hugh, Oxford OX2 6RH (GB)
(72) Inventor: Morgan, David Hugh, Oxford OX2 6RH (GB)

(57) **Abstract**

A table top has a top sheet (1), with a supporting wall (2) and a cast protective edge (3). The joint between the top sheet (1) and the supporting wall (2) is achieved by allowing the material for the edge (3) to flow into the groove (4), thereby creating a large surface area for the edging material(3) to bond with both the top sheet (1) and the supporting wall (2). The forces running through the joint are carried through the body of the edging material (3).

## Description

This invention relates to the construction of a lightweight table top.

The construction of a lightweight table top presents a number of problems to the designer. The principal one is the balance between weight, strength, durability and cost. In order to keep the cost low, it is not possible to use high performance engineering materials for the top. In order to achieve a durable product the top surface must be a hard, dense material, with an impact resistant edge. This rules out thin skinned honeycomb constructions. Therefore, the only solution remaining for the top surface is a dense thin sheet material for the top with a supporting structure. For maximum strength to weight performance, the main load bearing members of the subframe must be vertically orientated and thin. Joining the subframe to the top sheet presents considerable difficulty since you have a small surface area in the butt joint and no body of material in the top to sink screw or other devices into.

According to the present invention, the edge to the table is cast and the cast edge material is used to structurally bond the top sheet to the subframe. Polyurethane is widely used as a protective edge to table tops, but this design makes a dual use of the polyurethane, to provide the edge protection and also to give a reliable bond between the top sheet and the supporting subframe of the top. This is possible because the edging material is bonded onto both elements over a greater surface area than the direct contact surfaces between the components and the forces can be transferred through the body of the edging material.

### SEQUENCE LISTING PART OF DESCRIPTION

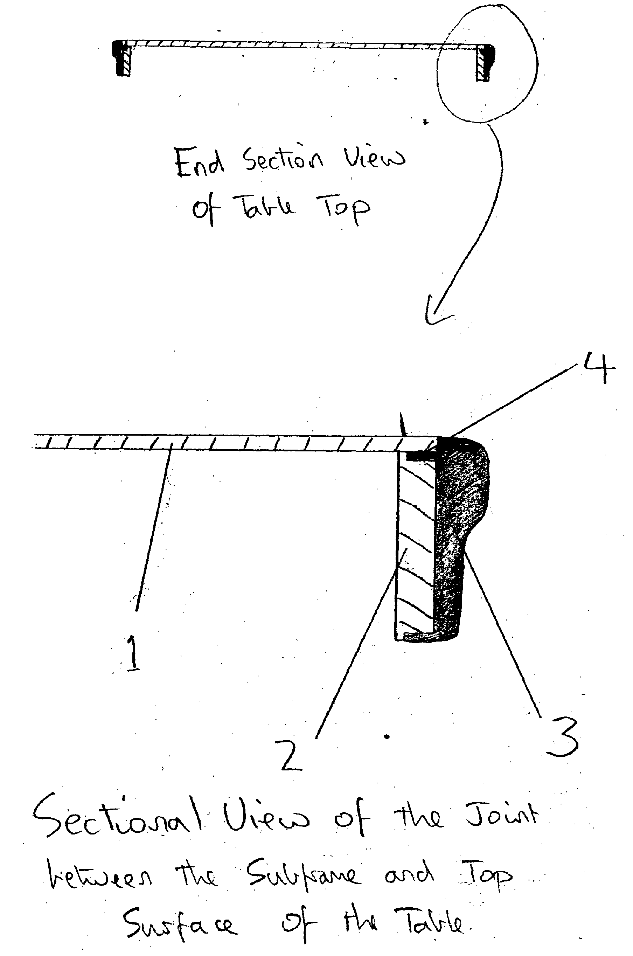

A specific embodiment of the invention is now described by way of example with reference to the accompanying drawing in which a cross sectional view of the table edge is shown. Referring to the drawing, the table top consists of a thin top sheet 1, supported by a load bearing wall 2. Both the top sheet 1 and wall 2 are protected by an edge 3, created by being cast in polyurethane. The wall 2 has been rebated at 4 to allow the polyurethane 3 to run between the top sheet 1 and the wall 2. In this way the bonding area on both the top sheet and the subframe elements is large enough and complex enough to give a reliable joint with the tensile and shear forces of the joint running through the body of the polyurethane.

## Claims

1. A joint between the top sheet and supporting subframe of a table top created by the structural use of the cast protective edge to the table top.

2. A joint as claimed in 1, achieved by rebating either the top sheet or the subframe components to allow the edge material to flow between the two elements to be bonded and increase the surface area of contact between the cast edge material and the body of these elements.

3. A joint as claimed in 1 or 2, achieved by casting the edge of the table in polyurethane.

4. A joint as claimed in 1, 2 or 3 using a thin (2-5mm) high pressure laminate sheet to form the top surface.

5. A joint as in 1 to construct a lightweight folding table top.
